# EUROPEAN PATENT SPECIFICATION

(11) **EP 4 334 179 B1**
(45) Date of publication and mention of the grant of the patent: **25.02.2026**
(21) Application number: 22726175.7
(22) Date of filing: 04.05.2022
(51) Int. Cl.: B60T 13/68, B60T 8/40, B60T 8/26, B62L 3/02, B60T 8/32, B60T 13/66, B60T 11/16

(54) **BRAKE-BY-WIRE TYPE BRAKING SYSTEM FOR MOTORCYCLES**
BRAKE-BY-WIRE-BREMSSYSTEM FÜR MOTORRÄDER
SYSTÈME DE FREINAGE DE TYPE INTÉGRÉ POUR MOTOCYCLETTES

(30) Priority: 06.05.2021 IT 202100011621
(43) Date of publication of application: 13.03.2024
(73) Proprietor: Brembo S.p.A., 24035 Curno (Bergamo) (IT)
(72) Inventor: DENTI, Francantonio, 24035 Curno, Bergamo (IT); FOLATTI, Matteo, 24035 Curno, Bergamo (IT); MAZZOLENI, Samuele, 24035 Curno, Bergamo (IT); BREMBILLA, Mauro, 24035 Curno, Bergamo (IT); BERTAGNA, Alessandro, 24035 Curno, Bergamo (IT)
(74) Representative: Mitola, Marco
(86) International application number: PCT/IB2022/054121
(87) International publication number: WO 2022/234480

(56) References cited:
- WO-A1-2020/058819
- US-A1- 2007 278 855
- US-A1- 2009 033 144
- US-A1- 2017 253 220

## Description

### FIELD OF APPLICATION

The present invention relates to a brake-by-wire (BBW) type braking system, particularly for motorcycles.

### PRIOR ART

In motorcycles, there are brake-by-wire type braking systems wherein the user may manually operate two separate manual controls, typically a lever on the handlebars, and a pedal, in order to send a request for a braking action to a special control unit.

This request for a braking action is switched to actuate one or more electric motors that act on the friction elements (typically pads, but may also be shoes) of the braking devices with which the motorcycle is equipped. In this way, under normal operating conditions, the user does not directly command the actuation of the braking devices but sends a braking request that is fulfilled by said electric motors, by means of a control unit.

In the event of a malfunction, the system must be able to allow a hydraulic back-up so as to ensure that the user may at least partially brake the motorcycle by direct action on the manually actuated devices.

The solutions of the motorcycles of the prior art do not allow for hydraulic back-up from both controls (lever and brake pedal) in case of failure of the E/E system (ECU, actuators, sensors, etc.) or in case of no power supply (disconnected battery) combined with the need to have a partially fluid-free actuation of the braking system (at least one DRY caliper or axle). Finally, the need is felt to provide braking systems compatible with electric vehicles (blending with regenerative braking, residual torque reduction). Solutions according to the preamble of claim 1 are disclosed by US 2007/278855 A1, US 2009/033144 A1, WO 2020/058819 A1 and US 2017/253220 A1.

### DISCLOSURE OF THE INVENTION

The need is therefore felt in the art to provide a braking system which allows the technical drawbacks mentioned with reference to the prior art to be resolved.

This need is satisfied by a braking system according to claims 1 and 10.

In particular, this need is satisfied by a braking system for a motorcycle comprising:
- at least one first braking device operatively connectable to a first wheel of the motorcycle, and equipped with a first hydraulic supply circuit,
- a first electric actuator having first electrical or electro-mechanical motor means operatively connected to a first electrically or electro-mechanically actuated piston fluidically connected to said first hydraulic supply circuit,
- at least one first interface port operatively connected to a first hydraulic device equipped with a first manually actuated piston,
- wherein the first manually actuated piston is subdivided into a first direct piston, directly connected to the first manually actuated device, and a first indirect piston, in series with the first direct piston, connected thereto by the interposition of a first return spring,
- the first indirect piston being in hydraulic connection with said first hydraulic supply circuit through a first by-pass duct, and arranged in series, upstream, with the first electrically or electro-mechanically actuated piston,
- wherein the braking system comprises a hydraulic fluid reservoir fluidically connected to the first hydraulic device by a connecting duct upstream from the first indirect piston and a connecting duct downstream from the first indirect piston,
- wherein the braking system is provided with a processing and control unit, operatively connected to said first electric actuator, programmed so that:
   - in standard operation, upon actuation of the first interface port, it translates the first electrically or electro-mechanically actuated piston so as to occlude the first by-pass duct, fluidically disconnects the first manually actuated piston from the first hydraulic supply circuit, and simultaneously actuates the at least one first braking device.

According to a possible embodiment, at least one of said upstream connection duct and downstream connection duct is provided with at least one device having at least one operating condition, such as an open position, which allows fluid to pass through the corresponding connection duct, and one operating condition, such as a closed position, which prevents fluid from passing through the corresponding connection duct, and in which in said standard operation, the devices, such as the selector valves, are switched so that the indirect piston may not move even following manual actuation and remains in an end stop position, while the first electrically or electro-mechanically actuated piston is translated to simultaneously actuate the at least one first braking device.

According to a possible embodiment, the at least one device provides for two operating conditions in which fluid is prevented or allowed to pass through the corresponding upstream connection duct in order to isolate the contribution of the first return spring during operation in hydraulic back-up mode.

According to a possible embodiment, the processing and control unit is programmed so that in back-up mode, it retracts or allows the retraction of the first electrically or electro-mechanically actuated piston so as not to occlude the first by-pass duct and to allow direct actuation of the first braking device by the first manually actuated piston when the first interface port is actuated.

According to a possible embodiment, the processing and control unit is programmed so that, in said back-up operation, it switches the devices, such as the selector valves, so that the first indirect piston may move according to manual actuation.

According to a possible embodiment not part of the invention as claimed, the first hydraulic supply circuit is fluidically connected to a pair of first braking devices that may be connected to the same first wheel.

According to a possible embodiment not part of the invention as claimed, the first hydraulic supply circuit is fluidically connected to a pair of first braking devices that may be connected to said first wheel and a second wheel, respectively, arranged on different axles of the motorcycle.

According to the invention as set forth in claim 1, the braking system comprises at least one second manually actuated device, separated from the first manually actuated device, and operatively connected to a second hydraulic device equipped with a second manually actuated piston,
- wherein the second manually actuated piston is hydraulically connected with said first indirect piston through a second by-pass duct, and is arranged in series, upstream, with the first indirect piston, which is in turn fluidically connected to the first hydraulic supply circuit through which it actuates the first braking device and/or a second braking device.

According to a possible embodiment, the second manually actuated piston is in turn subdivided into a second direct piston, directly connected to the second manually actuated device, and a second indirect piston, in series with the second direct piston and connected thereto by the interposition of a second return spring.

According to a possible embodiment, the second indirect piston is in hydraulic connection with the first indirect piston through the second by-pass duct, and is arranged in series, upstream, therewith.

According to a possible embodiment, the first braking device is operatively connectable to said first wheel of a first single axle of the motorcycle, and a second braking device is operatively connectable to a second wheel of a second axle of the motorcycle.

According to a possible embodiment, said first hydraulic device and said second hydraulic device are encompassed in the same pump body.

According to the invention as set forth in claim 10, the system comprises:
- at least a second braking device operatively connected to a second wheel of the motorcycle, and equipped with a second hydraulic supply circuit, fluidically separated from the first hydraulic supply circuit,
- a second electric actuator having second electric motor means operatively connected to a second electrically or electro-mechanically actuated piston, fluidically connected to said second supply circuit,
- at least a second manually actuated device operatively connected to a second hydraulic device equipped with a second manually actuated piston,
- wherein the second manually actuated piston is in hydraulic connection with said second supply circuit through a second by-pass duct, and is arranged in series, upstream, with the second electrically or electro-mechanically actuated piston,
- wherein the processing and control unit, is operatively connected to the second interface port and said second electric actuator, programmed so that:
- in standard operation, when the second interface port is operated, it translates the second electrically or electro-mechanically actuated piston so as to occlude the second by-pass duct, fluidically disconnects the second manually actuated piston from the second supply circuit, and actuates the second braking device.

According to a possible embodiment, at least one of said upstream connection duct and downstream connection duct is provided with a device having at least one operating condition, such as an open position, which allows fluid to pass through the corresponding connection duct, and an operating condition, such as a closed position, which prevents fluid from passing through the corresponding connection duct, and wherein in said standard operation, the devices, such as the selector valves, are switched so that the second indirect piston may not move even following manual actuation, while the second electrically or electro-mechanically actuated piston is translated to simultaneously actuate the at least one second braking device.

According to a possible embodiment, said processing and control unit is programmed so that in back-up operation, it retracts or allows the retraction of the second electrically or electro-mechanically actuated piston so as not to occlude the second by-pass duct and allow direct actuation of the second braking device by the second manually actuated piston.

According to a possible embodiment, the processing and control unit is programmed so that, in back-up operation, it switches devices, such as selector valves, so that the second indirect piston may move according to the manual actuation.

According to a possible embodiment, said first and second braking devices are arranged on different axles of the associated motorcycle.

### DESCRIPTION OF THE DRAWINGS

Further features and advantages of the present invention will become more apparent from the following description of preferred and non-limiting embodiments thereof, in which:

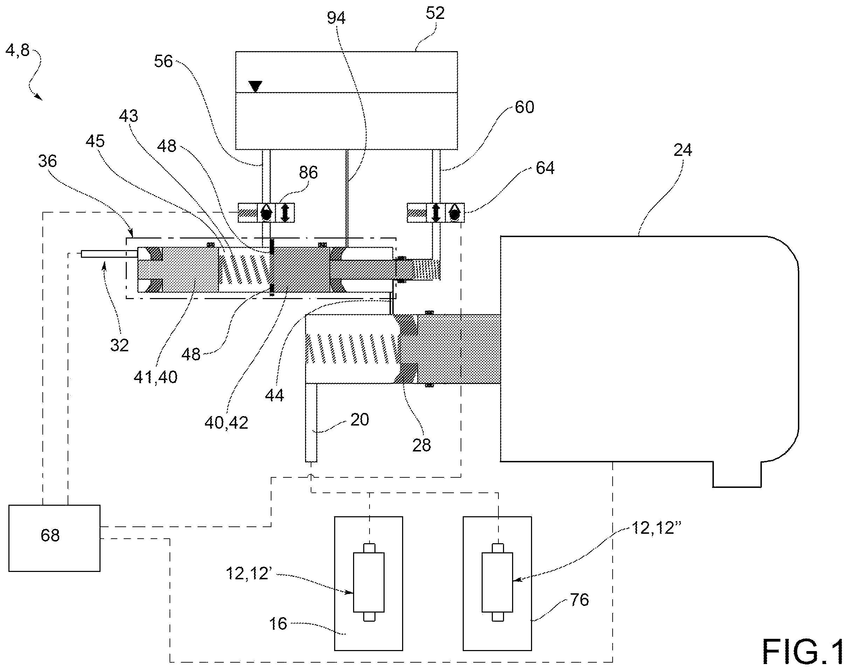

Fig. 1 shows a schematic view of a braking system according to a first embodiment not in accordance with the invention, in standard operating condition;
Fig. 2a,2b,2c represent schematic views of a braking system according to an embodiment of the present invention, in standard operating condition, in the shutdown condition of the BBW system, and in failure or back-up condition, respectively;
Fig. 3 shows a schematic view of a braking system according to a further embodiment of the present invention, in standard operating condition.

The elements or parts of elements common to the embodiments described hereinafter will be indicated with the same reference numerals.

### DETAILED DESCRIPTION

With reference to the aforesaid figures, reference numeral 4 globally denotes a braking system for a vehicle, in particular, for a motorcycle 8.

The braking system 4 for a motorcycle 8 comprises at least a first braking device 12 operatively connectable to a first wheel 16 of the motorcycle 8, and equipped with a first hydraulic supply circuit 20. The braking system 4 further comprises a first electric actuator 24 having first electrical or electro-mechanical motor means operatively connected to a first electrically or electro-mechanically actuated piston 28, fluidically connected to said first hydraulic supply circuit 20.

The connection between the electrical or electro-mechanical motor means and the first electrically or electro-mechanically actuated piston 28 may be direct, or intermediate mechanical connections may be provided, such as gears, gearboxes, linkages, and the like.

The electrically or electro-mechanically actuated first piston 28 is inserted into the first hydraulic supply circuit 20 so as to be able to pressurize, if translated, the fluid contained in said first hydraulic supply circuit and actuate the corresponding first braking device 12.

The braking system 4 comprises at least a first interface or input port 32 operatively connected to a first hydraulic device 36 equipped with a first manually actuated piston 40. Usually, the first interface port 32 is operatively connected to a lever device, usually on the handlebars of the motorcycle 8, or a foot pedal, usually near the foot pegs of the motorcycle 8.

The first manually actuated piston 40 is in hydraulic connection with the first hydraulic supply circuit 20 through a first by-pass duct 44 and is arranged in series, upstream, with the first electrically or electro-mechanically actuated piston 28.

The first manually actuated piston 40 is in turn subdivided into a first direct piston 41, directly connected to the first interface port 32, and a first indirect piston 42, in series with the first direct piston 41 and connected thereto by the interposition of a first return spring 43. A first hydraulic chamber 45 is interposed between the first direct piston 41 and the first indirect piston 42. In said configuration, the first indirect piston 42, if it is free to move, pressurizes the fluid in the first hydraulic supply circuit 20, in a hydraulic back-up condition.

The first hydraulic device 36 is also equipped with a first retainer 48 that forms a limit stop of the first indirect piston 42 as it approaches the first direct piston 41.

The braking system 4 comprises a hydraulic fluid reservoir 52 fluidically connected to the first hydraulic chamber 45 interposed between the direct piston 41 and the indirect piston 42 by an upstream connecting duct 56 from the first indirect piston 42 and a downstream connecting duct 60 of the first indirect piston 42. In addition, the hydraulic fluid reservoir 52 is fluidically connected directly to the first by-pass duct 44 by a connecting or supply duct 94.

Preferably, the first retainer 48 is placed so as to prevent the first indirect piston 42 from occluding the upstream connection duct 56.

Preferably, each of said upstream connection duct 56 and downstream connection duct 60 is provided with at least one device 86,64, respectively, capable of preventing the advancement of the indirect piston 42 in one of its operating conditions; in particular, the at least one device 86,64 provides for at least one operating condition, such as an open position, that allows fluid to pass through the corresponding connection duct 56,60 and one operating condition, such as a closed position, that prevents fluid from passing through the corresponding connection duct 56,60.

Preferably, the at least one device 64 provides for at least one operating condition that prevents fluid from passing through the corresponding downstream connection duct 60, thereby preventing the advancement of the first indirect piston 42, and one operating condition that allows fluid to pass through the downstream connection duct 60.

Preferably, the at least one device 86,64 may provide two operating conditions wherein fluid is either prevented or allowed to pass through the corresponding upstream connection duct 56, in order to isolate the contribution of the return spring 43 during operation in hydraulic back-up mode.

Preferably said at least one device 86, 64 is a selector valve. According to one embodiment, said at least one selector valve 86,64 is thus switched to allow switching between the standard operating mode and the hydraulic back-up mode.

Preferably, said at least one selector valve 86,64 is operatively connected to a processing and control unit 68 better described below.

According to one possible embodiment, the at least one selector valve 86,64 also comprises a partially open position wherein it functions as a one-way valve that allows fluid to flow only in one direction, specifically from the hydraulic fluid reservoir 52 through the ducts 60 and 56 to the pistons 41 and 42.

Advantageously, the system is provided with a processing and control unit 68, operatively connected to a first interface port 32 and to said first electric actuator 24.

Said processing and control unit 68 is programmed so that in standard operation, upon actuation of the first interface port 32, it translates the first electrically or electro-mechanically actuated piston 28 so as to occlude the first by-pass duct 44, fluidically disconnect the first manually actuated piston 40 from the first hydraulic supply circuit 20, and simultaneously actuate the at least one first braking device 12.

Due to the fact that the first by-pass duct 44 is occluded, the user is unable to directly modulate the actuation of the first braking device 12, which is instead actuated by the first electrically or electro-mechanically actuated piston 28.

Preferably, in said standard operation, said at least one selector valve 86,64 is switched so that the indirect piston 42 may not move even following manual actuation and remains in the end position defined by the first retainer 48, while the first electrically or electro-mechanically actuated piston 28 is translated to actuate the at least one first braking device 12 simultaneously.

Further, according to one possible embodiment, the processing and control unit 68 is programmed so that in back-up operation, it retracts or allows the retraction of the first electrically or electro-mechanically actuated piston 28 so as not to occlude the first by-pass duct 44 and allow the direct actuation of the first braking device 12 by the first manually actuated piston 40 when the first interface port 32 is actuated.

Preferably, the processing and control unit 68 is programmed so that, in back-up operation, it allows the switching of at least one selector valve 86,64 so that the first indirect piston 42 may move according to manual actuation.

Preferably, said at least one selector valve 86, 64 switches to the back-up operating condition through an elastic element.

In other words, in the electrical fault or back-up condition, the user directly actuates the first braking device 12 through the first interface port 32, ensuring that the motorcycle 8 may always be braked or stopped.

The first hydraulic supply circuit 20 may be fluidically connected to a pair of first braking devices 12',12", which may be connected to the same first wheel 16.

It is also possible to provide for the first supply circuit 20 to be fluidically connected to a pair of braking devices 12',12'', connectable to said first wheel 16 and a second wheel 76, respectively, arranged on different axles of the motorcycle 8.

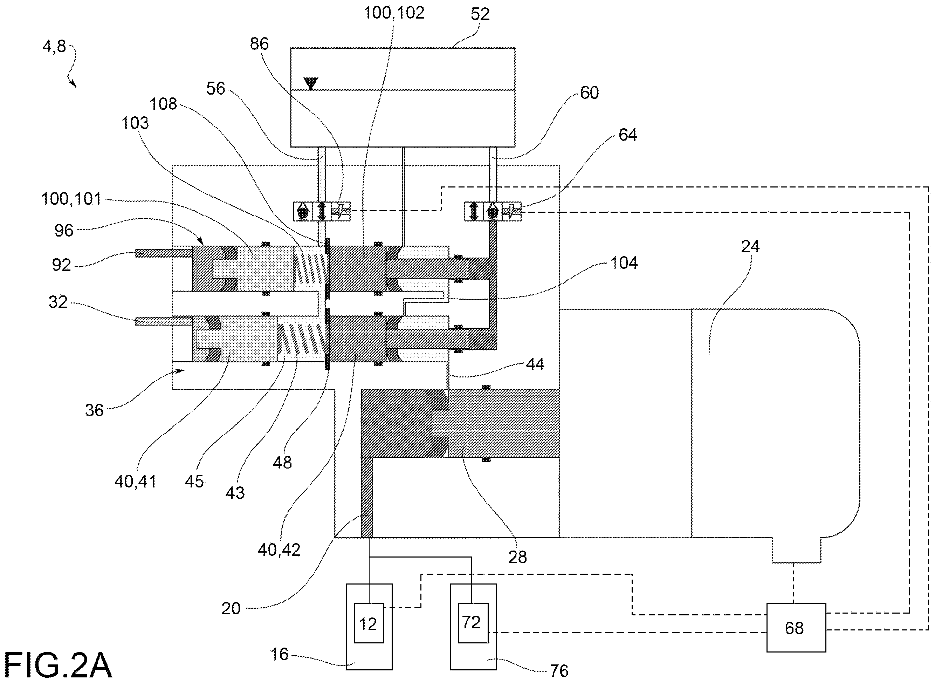

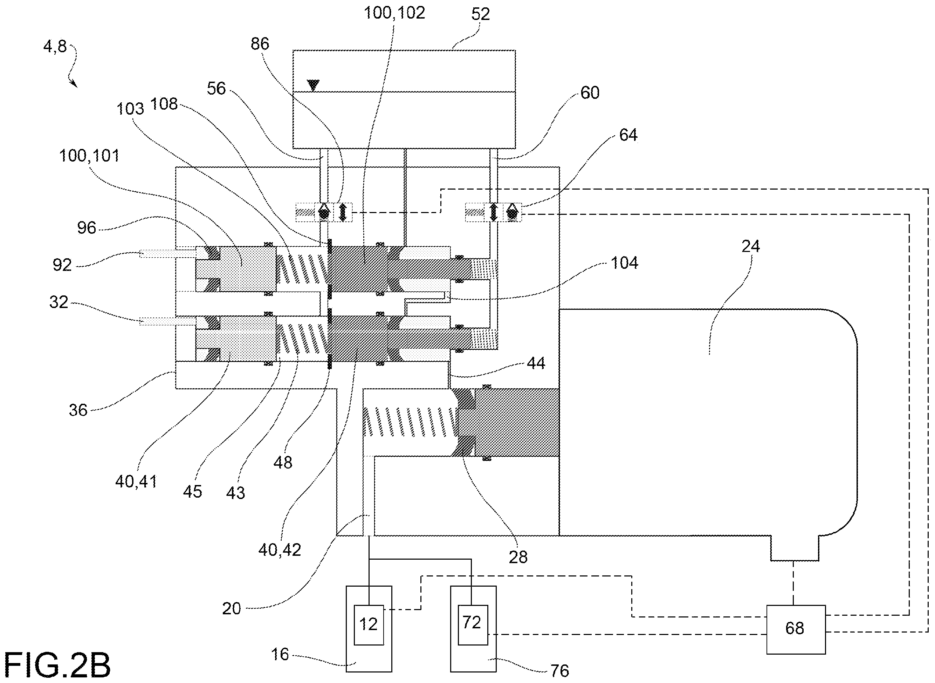

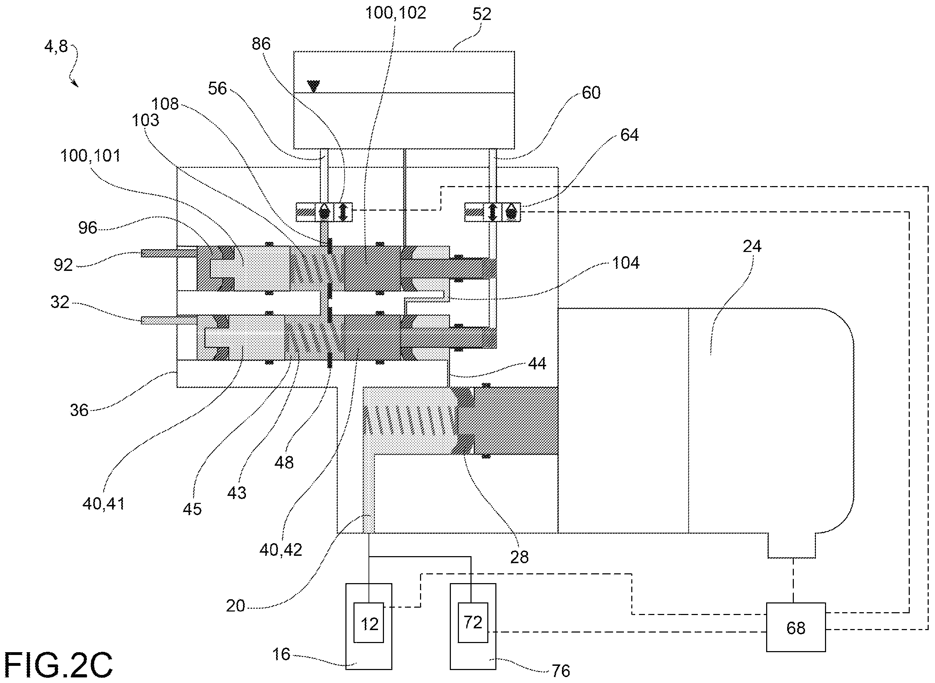

According to an embodiment of the present invention (Fig. 2a-2c) the braking system 4 comprises at least one second input port 92, separate from the first input port 32, and operatively connected to a second hydraulic device 96 equipped with a second manually actuated piston 100.

The second manually actuated piston 100 is hydraulically connected to said first indirect piston 42 (which in turn is connected to the first manually actuated piston 41) through a second by-pass duct 104, and is arranged in series, upstream, with the first indirect piston 42. The first indirect piston 42 is in turn fluidically connected with the first hydraulic supply circuit 20 through which it actuates the first braking device 12 and/or the second braking device 72.

Preferably, said first and second hydraulic devices 36,96 are incorporated into the same hydraulic device.

According to a possible embodiment, the first braking device 12 is operatively connected to said first wheel 16 of a first single axle of the motorcycle 8, and a second braking device 72 is operatively connected to a second wheel 76 of a second axle of the motorcycle 8.

The second indirect piston 102 is in hydraulic connection with the first indirect piston 42 through the second by-pass duct 104, and is arranged in series, upstream, therewith.

According to one possible embodiment, the second manually actuated piston 100 is in turn subdivided into a second direct piston 101, directly connected to the second manually actuated device 92, and a second indirect piston 102, in series with the second direct piston 101 and connected thereto by the interposition of a second return spring 103. In such a configuration, the second indirect piston 102 pressurizes the fluid in the second by-pass port 104. A second hydraulic chamber 105 is interposed between the second direct piston 101 and the second indirect piston 102.

The second hydraulic device 96 is also equipped with a second retainer 108 that forms a limit stop of the second indirect piston 102 as it approaches the second direct piston 101.

The braking system 4 comprises, as seen, a hydraulic fluid reservoir 52 fluidically connected to the second hydraulic device 96 by an upstream duct 56 connected to the second indirect piston 102 and a downstream duct 60 connected to the second indirect piston 102.

Preferably, the second retainer 108 is placed so as to prevent the second indirect piston 102 from occluding the upstream connection duct 56.

Preferably, each of said upstream connection duct 56 and downstream connection duct 60 is equipped with at least one selector valve 86,64 having at least one operating condition, such as an open position, that allows fluid to pass through the corresponding connection duct 56,60, and one operating condition, such as a closed position, that prevents fluid from passing through the corresponding connection duct 56,60. Said selector valves 64 are operatively connected to the processing and control unit 68.

According to a possible embodiment, the at least one selector valve 86,64 also comprises a partially open position wherein it functions as a one-way valve that allows fluid to flow only in one direction, specifically from the hydraulic fluid reservoir 52 to the second hydraulic device 96.

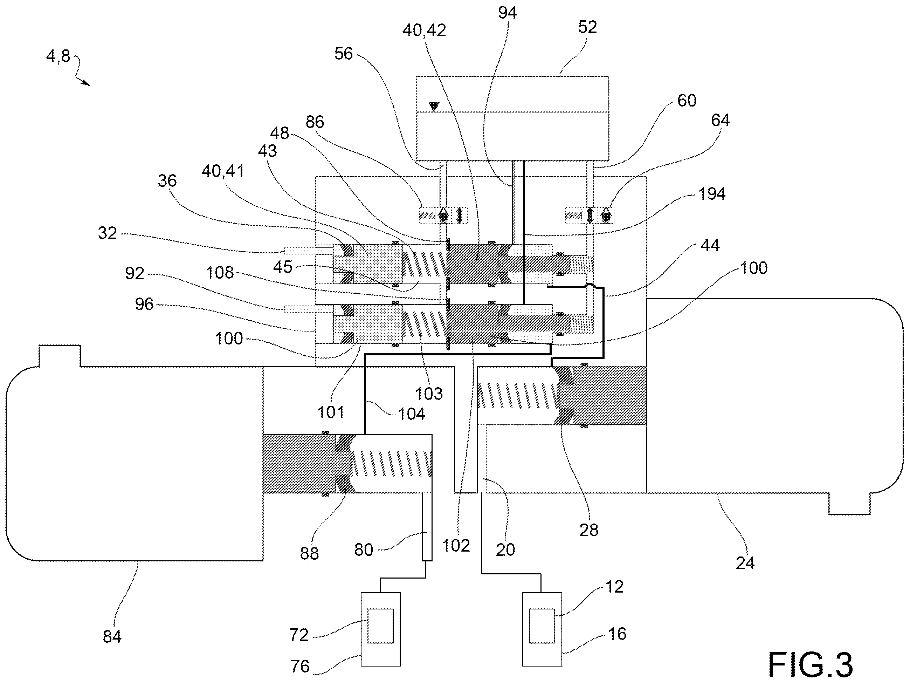

According to a further embodiment of the present invention (Fig. 3), the braking system 4 for a motorcycle 8 comprises at least one second braking device 72 operatively connected to a second wheel 76 of the motorcycle 8, and provided with a second hydraulic supply circuit 80 fluidically separated from the first hydraulic supply circuit 20.

The braking system 4 comprises a second electric actuator 84 having second electric motor means operatively connected to a second electrically or electro-mechanically actuated piston 88 fluidically connected to said second supply circuit 80 and at least a second manually actuated device 92 operatively connected to a second hydraulic device 96 equipped with a second manually actuated piston 100.

The second manually actuated piston 100 is in hydraulic connection with said second supply circuit 80 by a second by-pass duct 104, and is arranged in series, upstream, with the second electrically or electro-mechanically actuated piston 88.

The processing and control unit 68 is operatively connected to the second interface port 92 and to said second electric actuator 84 and is programmed so that, in standard operation, when the second interface port 92 is actuated, it translates the second electrically or electro-mechanically actuated piston 88 so as to occlude the second by-pass duct 104, fluidically disconnect the second manually actuated piston 100 from the second supply circuit 80, and actuate the second braking device 72.

Due to the fact that the second by-pass duct 104 is occluded, the user is unable to directly modulate the actuation of the second braking device 72 which is instead actuated by the second electrically or electro-mechanically actuated piston 88.

Preferably, in said standard operation, the at least one selector valve 86,64 is switched so that the second indirect piston 102 may not move even as a result of the manual actuation and remains in the end position defined by the second retainer 108, while the second electrically or electro-mechanically actuated piston 88 is translated to actuate simultaneously the at least one second braking device 72.

Said processing and control unit 68 is programmed so that in back-up operation, it retracts or allows the retraction of the position of the second electrically or electro-mechanically actuated piston 88 so as not to occlude the second by-pass duct 104 and to allow direct actuation of the second braking device 72 by the second manually actuated piston 100.

Preferably, the processing and control unit 68 is programmed so that, in back-up operation, it allows the switching of at least one selector valve 86,64 so that the second indirect piston 102 may move according to the manual actuation.

Preferably, said first and second braking devices 12,72 are arranged on different axles of the associated motorcycle.

Preferably, said first and second hydraulic devices 36,96 are encompassed in the same pump body.

Preferably, said braking devices 12,72 comprise disc brakes and/or drum brakes.

The first manually actuated piston 40 is in hydraulic connection with the first hydraulic supply circuit 20 through the first by-pass duct 44, and is arranged in series, upstream, with the first electrically or electro-mechanically actuated piston 28.

According to one possible embodiment, the first manually actuated piston is in turn subdivided into a first direct piston 41, directly connected to the first interface port 32, and a first indirect piston 42, in series with the first direct piston 41 and connected thereto by the interposition of a first return spring 43. In this configuration, the first indirect piston 42 pressurizes the fluid in the first hydraulic supply circuit 20.

The first hydraulic device 36 is also equipped with a first retainer 48 that forms a limit stop of the first indirect piston 42 as it approaches the first direct piston 41.

The braking system 4 comprises a hydraulic fluid reservoir 52 fluidically connected to the first hydraulic device 36 by an upstream duct 56 connected to the first indirect piston 42 and a downstream duct 60 connected to the first indirect piston 42. More specifically, the hydraulic fluid reservoir 52 is fluidically connected to the hydraulic chamber 45 interposed between the first direct piston 41 and the first indirect piston 42.

Further, the hydraulic fluid reservoir 52 is fluidically connected directly to the second by-pass duct 104 via a connection or supply duct 194. Preferably, the first retainer 48 is placed so as to prevent the first indirect piston 42 from occluding the upstream connection duct 56.

Preferably, at least one of said upstream connection duct 56 and downstream connection duct 60 is equipped with at least one device, such as a selector valve 64,86 capable of preventing the advancement of the first indirect piston 42 in one of its operating conditions, having at least one operating condition, such as an open position, that allows fluid to pass through the corresponding connection duct 56,60 and one operating condition, such as a closed position, that prevents fluid from passing through the corresponding connection duct 56,60.

For example, the at least one device 64 provides for at least one operating condition that prevents fluid from passing through the corresponding downstream connection duct 60, thereby preventing the advancement of the first indirect piston 42 and one operating condition that allows fluid to pass through the downstream connection piston 60.

Preferably, the at least one device 86,64 may provide two operating conditions under which the fluid is either prevented or allowed to pass through the corresponding upstream connection duct 56 in order to isolate the contribution of the return spring 43 during operation in hydraulic back-up mode.

Said at least one selector valve 64,86 is operatively connected to a processing and control unit 68 better described below.

According to a possible embodiment, the at least one selector valve 86,64 also comprises a partially open position wherein it functions as a one-way valve that allows fluid flow only in one direction, specifically from the hydraulic fluid reservoir 52 to the first hydraulic device 36.

According to an embodiment, the second manually actuated piston 100 is in turn subdivided into a second direct piston 101, directly connected to the second manual actuating device 92, and a second indirect piston 102, in series with the second direct piston 101 and connected thereto by the interposition of a second return spring 103. In this configuration, the second indirect piston 102 pressurizes the fluid in the second hydraulic supply circuit 80.

The second hydraulic device 96 is also equipped with a second retainer 108 that forms a limit stop of the second indirect piston 102 as it approaches the second direct piston 101.

As may be appreciated from that which is described, the present invention overcomes the drawbacks of the prior art.

Specifically, the braking system of the present invention allows the hydraulic back-up to be operated from both the controls (lever and brake pedal) in case of failure of the E/E system (ECU, actuators, sensors, etc.) or in case of power failure (disconnected battery) in combination with an actuation of the partially fluid-free braking system (at least one DRY caliper).

Finally, the present invention enables the provision of braking systems compatible with electric vehicles (blending with regenerative braking, residual torque reduction).

A person skilled in the art, for the purpose of satisfying contingent and specific needs, may make numerous modifications and variations to the braking systems and motorcycles described above, all of which are, however, contained in the present invention as mechanical and/or functional equivalents.

The scope of protection of the invention is defined by the appended claims.

## Claims

1. A braking system (4) for a motorcycle (8) comprising:
- at least a first braking device (12) operatively connected to a first wheel (16) of the motorcycle (8), and provided with a first hydraulic supply circuit (20),
- a first electric actuator (24) having first motor means, electrically or electro-mechanically actuated and operatively connected to a first electrically or electro-mechanically actuated piston (28) fluidically connected to said first hydraulic supply circuit (20),
- at least one first interface or input port (32) operatively connected to a first hydraulic device (36) provided with a first manually operated piston (40),
- wherein the first manually operated piston (40) is subdivided into a first direct piston (41), directly connected to the first interface port (32), and a first indirect piston (42), in series with the first direct piston (41), connected to it by the interposition of a first return spring (43),
- the first indirect piston (42) being hydraulically connected to said first hydraulic supply circuit (20) through a first by-pass duct (44), and arranged in series, upstream, with the first electrically or electro-mechanically actuated piston (28),
- wherein the braking system (4) comprises a hydraulic fluid reservoir (52) fluidically connected to the first hydraulic device (36) by a connection duct (56) upstream of the first indirect piston (42) and a connection duct (60) downstream of the first indirect piston (42),
- wherein the braking system (8) is provided with a processing and control unit (68), operatively connected to said first electric actuator (24), programmed so that:
- in standard operation, upon actuation of the first interface port (32), the first electrically or electro-mechanically operated piston (28) translates so as to occlude the first by-pass duct (44), fluidically disconnect the first manually operated piston (40) from the first hydraulic supply circuit (20), and simultaneously operate the at least one first braking device (12),
**characterized in that**
the braking system (4) comprises at least a second manually operated device (92), separate from the first interface port (32), and operatively connected to a second hydraulic device (96) provided with a second manually operated piston (100),
- wherein the second manually operated piston is hydraulically connected to said first indirect piston (42) through a second by-pass duct (104), and is arranged in series, upstream, with the first indirect piston (42) which is in turn fluidically connected to the first hydraulic supply circuit (20) through which it operates the first braking device (12) and/or a second braking device (72).

2. The braking system (4) for a motorcycle (8) according to claim 1, wherein at least one of said upstream connection duct (56) and downstream connection duct (60) is provided with at least one device (64, 86) having at least one operating condition, which allows fluid to pass through the corresponding connection duct (56,60), and an operating condition, such as a closed position, which prevents the passage of fluid through the corresponding connection duct (56,60), and wherein in said standard operation, said device (64, 86) is switched so that the indirect piston (42) cannot move even following manual actuation and remains in an end stop position, while the first electrically or electro-mechanically actuated piston (28) is translated to simultaneously actuate the at least one first braking device (12).

3. The braking system (4) for a motorcycle (8) according to claim 2, wherein the at least one device (86,64) provides for two operating conditions in which the passage of fluid through the corresponding upstream connection duct (56) is prevented or allowed, in order to isolate the contribution of the first return spring (43) during operation in hydraulic back-up mode.

4. The braking system (4) for a motorcycle (8) according to claim 1, 2 or 3, wherein the processing and control unit (68) is programmed so that in back-up mode, it retracts or allows the retraction of the first electrically or electro-mechanically actuated piston (28) so as not to occlude the first by-pass duct (44) and to allow direct actuation of the first braking device (12) by the first manually actuated piston (40), when the first interface port (32) is actuated.

5. The braking system (4) for a motorcycle (8) according to claim 4 in combination with claim 2, wherein the processing and control unit (68) is programmed such that, in said back-up mode, it switches the at least one device (64, 86) so that the first indirect piston (42) may move according to the manual actuation.

6. The braking system (4) for a motorcycle (8) according to any one of claims 1 to 5, wherein the second manually operated piston (100) is in turn subdivided into a second direct piston (101), directly connected to the second manually operating device (92), and a second indirect piston (102), in series with the second direct piston (101) and connected therewith by the interposition of a second return spring (103).

7. The braking system (4) for a motorcycle (8) according to claim 6, wherein the second indirect piston (102) is in hydraulic connection with the first indirect piston (42) via the second by-pass duct (104), and is arranged in series, upstream, therewith.

8. The braking system (4) for a motorcycle (8) according to any one of claims 1 to 7, wherein the first braking device (12) is operatively connectable to said first wheel (16) of a first single axle of the motorcycle (8) and the second braking device (72) is operatively connectable to a second wheel (76) of a second axle of the motorcycle (8).

9. The braking system (4) for a motorcycle (8) according to any of the claims from 8 to 11, wherein said first and second hydraulic devices (36, 96) are encompassed in the same pump body.

10. A braking system (4) for a motorcycle (8) wherein the system comprises:
- at least a first braking device (12) operatively connected to a first wheel (16) of the motorcycle (8), and provided with a first hydraulic supply circuit (20),
- a first electric actuator (24) having first motor means, electrically or electro-mechanically actuated and operatively connected to a first electrically or electro-mechanically actuated piston (28) fluidically connected to said first hydraulic supply circuit (20),
- at least one first interface or input port (32) operatively connected to a first hydraulic device (36) provided with a first manually operated piston (40),
- wherein the first manually operated piston (40) is subdivided into a first direct piston (41), directly connected to the first interface port (32), and a first indirect piston (42), in series with the first direct piston (41), connected to it by the interposition of a first return spring (43),
- the first indirect piston (42) being hydraulically connected to said first hydraulic supply circuit (20) through a first by-pass duct (44), and arranged in series, upstream, with the first electrically or electro-mechanically actuated piston (28),
- wherein the braking system (4) comprises a hydraulic fluid reservoir (52) fluidically connected to the first hydraulic device (36) by a connection duct (56) upstream of the first indirect piston (42) and a connection duct (60) downstream of the first indirect piston (42),
- wherein the braking system (8) is provided with a processing and control unit (68), operatively connected to said first electric actuator (24), programmed so that:
- in standard operation, upon actuation of the first interface port (32), the first electrically or electro-mechanically operated piston (28) translates so as to occlude the first by-pass duct (44), fluidically disconnect the first manually operated piston (40) from the first hydraulic supply circuit (20), and simultaneously operate the at least one first braking device (12), the braking system (4) being **characterized by**
- at least a second braking device (72) operatively connected to a second wheel (76) of the motorcycle (8), and provided with a second hydraulic supply circuit (80), fluidically separate from the first hydraulic supply circuit (20),
- a second electric actuator (84) having second electric motor means operatively connected to a second electrically or electro-mechanically actuated piston (88) fluidically connected to said second supply circuit (80),
- at least one second manually actuated device (92) operatively connected to a second hydraulic device (96) provided with a second manually actuated piston (100),
- wherein the second manually actuated piston (100) is hydraulically connected to said second supply circuit (80) via a second by-pass duct (104), and is arranged in series, upstream, with the second electrically or electro-mechanically actuated piston (88),
- wherein the processing and control unit (68), is operatively connected to the second interface port (92) and to said second electric actuator (84), programmed so that:
- in standard operation, upon actuation of the second interface port (92), the second electrically or electro-mechanically actuated piston (88) translates so as to occlude the second by-pass duct (104), fluidically disconnect the second manually actuated piston (100) from the second supply circuit (80), and actuate the second braking device (72).

11. The braking system (4) for a motorcycle (8) according to claim 10, wherein at least one of said upstream connection duct (56) and downstream connection duct (60) is provided with a device (64, 86) having at least one operating condition, which allows fluid to pass through the corresponding connection duct (56,60), and an operating condition, such as a closed position, which prevents the passage of fluid through the corresponding connection duct (56,60), and wherein in said standard operation, said at least one device (64,84) is switched so that the second indirect piston (102) may not move even following manual actuation, while the second electrically or electro-mechanically actuated piston (88) is moved to simultaneously actuate the at least one second braking device (72).

12. The braking system (4) for a motorcycle (8) according to claim 10 or 11, wherein said processing and control unit is programmed so that in back-up mode, it retracts or allows the retraction of the second electrically or electro-mechanically actuated piston (88) so as not to occlude the second by-pass duct (104) and to allow direct actuation of the second braking device (72) by the second manually actuated piston (100).

13. The braking system (4) for a motorcycle (8) according to claim 12 in combination with claim 11, wherein the processing and control unit (68) is programmed such that, in back-up mode, it switches the at least one device (64,84) so that the second indirect piston (102) may move in accordance with the manual actuation.

14. The braking system (4) for a motorcycle (8) according to claim 10, 11, 12 or 13, wherein said first and second braking devices are placed on different axles of the associable motorcycle.

15. A motorcycle (8) comprising a braking system (4) according to any of the claims from 1 to 14.

## Patentansprüche

1. Bremssystem (4) für ein Motorrad (8), umfassend:
- mindestens eine erste Bremsvorrichtung (12), die operativ mit einem ersten Rad (16) des Motorrads (8) verbunden ist und mit einer ersten hydraulischen Versorgungsschaltung (20) versehen ist,
- einen ersten elektrischen Aktuator (24) aufweisend erste Motormittel, die elektrisch oder elektromechanisch betätigt werden und operativ mit einem ersten elektrisch oder elektromechanisch betätigten Kolben (28) verbunden sind, der in Fluidverbindung mit der ersten hydraulischen Versorgungsschaltung (20) steht,
- mindestens eine erste Schnittstelle oder Einlassöffnung (32), die operativ mit einer ersten hydraulischen Vorrichtung (36) verbunden ist, die mit einem ersten manuell betätigten Kolben (40) versehen ist,
- wobei der erste manuell betätigte Kolben (40) in einen ersten direkten Kolben (41), der direkt mit der ersten Schnittstellenöffnung (32) verbunden ist, und einen ersten indirekten Kolben (42) unterteilt ist, der in Reihe mit dem ersten direkten Kolben (41) angeordnet ist und über die Zwischenschaltung einer ersten Rückstellfeder (43) mit diesem verbunden ist,
- wobei der erste indirekte Kolben (42) hydraulisch mit der ersten hydraulischen Versorgungsschaltung (20) über eine erste Bypass-Leitung (44) verbunden ist und in Reihe, stromaufwärts, mit dem ersten elektrisch oder elektromechanisch betätigten Kolben (28) angeordnet ist,
- wobei das Bremssystem (4) einen Hydraulikflüssigkeitsbehälter (52) umfasst, der in Fluidverbindung mit der ersten hydraulischen Vorrichtung (36) über eine Verbindungsleitung (56) stromaufwärts des ersten indirekten Kolbens (42) und eine Verbindungsleitung (60) stromabwärts des ersten indirekten Kolbens (42) verbunden ist,
- wobei das Bremssystem (8) mit einer Verarbeitungs- und Steuereinheit (68) versehen ist, die operativ mit dem ersten elektrischen Aktuator (24) verbunden ist und derart programmiert ist, sodass:
- im Standardbetrieb bei Aktivierung der ersten Schnittstellenöffnung (32) der erste elektrisch oder elektromechanisch betätigte Kolben (28) verschoben wird, sodass er die erste Bypass- Leitung (44) verschließt, den ersten manuell betätigten Kolben (40) fluidisch von der ersten hydraulischen Versorgungsschaltung (20) trennt und gleichzeitig die mindestens eine erste Bremsvorrichtung (12) betätigt,
**dadurch gekennzeichnet, dass**
das Bremssystem (4) mindestens eine zweite manuell betätigte Vorrichtung (92) umfasst, die von der ersten Schnittstellenöffnung (32) getrennt ist und operativ mit einer zweiten hydraulischen Vorrichtung (96) verbunden ist, die mit einem zweiten manuell betätigten Kolben (100) versehen ist,
- wobei der zweite manuell betätigte Kolben hydraulisch mit dem ersten indirekten Kolben (42) über eine zweite Bypass-Leitung (104) verbunden ist und in Reihe, stromaufwärts, mit dem ersten indirekten Kolben (42) angeordnet ist, der seinerseits in Fluidverbindung mit der ersten hydraulischen Versorgungsschaltung (20) steht, über den er die erste Bremsvorrichtung (12) und/oder eine zweite Bremsvorrichtung (72) betätigt.

2. Bremssystem (4) für ein Motorrad (8) nach Anspruch 1, wobei eine der mindestens eine stromaufwärts angeordnete Verbindungsleitung (56) und stromabwärts angeordnete Verbindungsleitung (60) mit mindestens einer Vorrichtung (64, 86) versehen ist, die mindestens einen Betriebszustand aufweist, der den Durchgang von Fluid durch die entsprechenden Verbindungsleitung (56, 60) ermöglicht, sowie einen Betriebszustand, wie beispielsweise eine geschlossene Stellung, der den Durchgang von Fluid durch die entsprechende Verbindungsleitung (56, 60) verhindert, und wobei in dem Standardbetrieb die Vorrichtung (64, 86) geschaltet wird, sodass sich der indirekte Kolben (42) selbst nach manueller Betätigung nicht bewegen kann und in einer Endhaltestellung bleibt, während der erste elektrisch oder elektromechanisch betätigte Kolben (28) verschoben wird, um gleichzeitig die mindestens eine erste Bremsvorrichtung (12) zu betätigen.

3. Bremssystem (4) für ein Motorrad (8) nach Anspruch 2, wobei die mindestens eine Vorrichtung (86, 64) zwei Betriebszustände vorsieht, in denen der Durchgang von Fluid durch die entsprechende stromaufwärts angeordnete Verbindungsleitung (56) verhindert oder ermöglicht wird, um den Beitrag der ersten Rückstellfeder (43) während des Betriebs in dem hydraulischen Back-up-Betriebsmodus zu isolieren.

4. Bremssystem (4) für ein Motorrad (8) nach einem der Ansprüche 1, 2 oder 3, wobei die Verarbeitungs- und Steuereinheit (68) programmiert ist, sodass sie in dem Back-up-Betriebsmodus den Rückzug des ersten elektrisch oder elektromechanisch betätigten Kolbens (28) verhindert oder ermöglicht, um die erste Bypass-Leitung (44) nicht zu verschließen und eine direkte Betätigung der ersten Bremsvorrichtung (12) durch den ersten manuell betätigten Kolben (40) zu ermöglichen, wenn die erste Schnittstellenöffnung (32) aktiviert wird.

5. Bremssystem (4) für ein Motorrad (8) nach Anspruch 4 in Kombination mit Anspruch 2, wobei die Verarbeitungs- und Steuereinheit (68) programmiert ist, sodass sie in dem Back-up-Betriebsmodus die mindestens eine Vorrichtung (64, 86) schaltet, sodass sich der erste indirekte Kolben (42) nach der manuellen Betätigung bewegen kann.

6. Bremssystem (4) für ein Motorrad (8) nach einem der Ansprüche 1 bis 5, wobei der zweite manuell betätigte Kolben (100) seinerseits in einen zweiten direkten Kolben (101), der direkt mit der zweiten manuell betätigten Vorrichtung (92) verbunden ist, und einen zweiten indirekten Kolben (102) unterteilt wird, der in Reihe mit dem zweiten direkten Kolben (101) angeordnet ist und über die Zwischenschaltung einer zweiten Rückstellfeder (103) mit diesem verbunden ist.

7. Bremssystem (4) für ein Motorrad (8) nach Anspruch 6, wobei der zweite indirekte Kolben (102) über die zweite Bypass-Leitung (104) hydraulisch mit dem ersten indirekten Kolben (42) verbunden ist und in Reihe, stromaufwärts, dazu angeordnet ist.

8. Bremssystem (4) für ein Motorrad (8) nach einem der Ansprüche 1 bis 7, wobei die erste Bremsvorrichtung (12) operativ mit dem ersten Rad (16) einer ersten Einzelachse des Motorrads (8) verbunden werden kann und die zweite Bremsvorrichtung (72) operativ mit einem zweiten Rad (76) einer zweiten Achse des Motorrads (8) verbunden werden kann.

9. Bremssystem (4) für ein Motorrad nach einem der Ansprüche 8 bis 11, wobei die erste und die zweite hydraulischen Vorrichtungen (36, 96) in demselben Pumpenkörper enthalten sind.

10. Bremssystem (4) für ein Motorrad (8), wobei das System umfasst:
- mindestens eine erste Bremsvorrichtung (12), die operativ mit einem ersten Rad (16) des Motorrads (8) verbunden ist und mit einer ersten hydraulischen Versorgungsschaltung (20) versehen ist,
- einen ersten elektrischen Aktuator (24) aufweisend erste Motormittel, die elektrisch oder elektromechanisch betätigt sind und operativ mit einem ersten elektrisch oder elektromechanisch betätigten Kolben (28) verbunden sind, der in Fluidverbindung mit der ersten hydraulischen Versorgungsschaltung (20) steht,
- mindestens eine erste Schnittstelle oder Einlassöffnung (32), die operativ mit einer ersten hydraulischen Vorrichtung (36) verbunden ist, die mit einem ersten manuell betätigten Kolben (40) versehen ist,
- wobei der erste manuell betätigte Kolben (40) in einen ersten direkten Kolben (41), der direkt mit der ersten Schnittstellenöffnung (32) verbunden ist, und einen ersten indirekten Kolben (42) unterteilt wird, der in Reihe mit dem ersten direkten Kolben (41) angeordnet ist und über die Zwischenschaltung einer ersten Rückstellfeder (43) mit diesem verbunden ist,
- wobei der erste indirekte Kolben (42) hydraulisch mit der ersten hydraulischen Versorgungsschaltung (20) über eine ersten Bypass-Leitung (44) verbunden ist und in Reihe, stromaufwärts, mit dem ersten elektrisch oder elektromechanisch betätigten Kolben (28) angeordnet ist,
- wobei das Bremssystem (4) einen Hydraulikflüssigkeitsbehälter (52) umfasst, der in Fluidverbindung mit der ersten hydraulischen Vorrichtung (36) über eine Verbindungsleitungsleitung (56) stromaufwärts des ersten indirekten Kolbens (42) und eine Verbindungsleitungsleitung (60) stromabwärts des ersten indirekten Kolbens (42) verbunden ist,
- wobei das Bremssystem (8) mit einer Verarbeitungs- und Steuereinheit (68) versehen ist, die operativ mit dem ersten elektrischen Aktuator (24) verbunden ist und programmiert ist, sodass:
- in dem Standardbetrieb bei Aktivierung der ersten Schnittstellenöffnung (32) der erste elektrisch oder elektromechanisch betätigte Kolben (28) verschoben wird, sodass er die erste Bypass-Leitung (44) verschließt, den ersten manuell betätigten Kolben (40) fluidisch von dem ersten hydraulischen Versorgungskreis (20) trennt und die mindestens eine erste Bremsvorrichtung (12) betätigt,
wobei das Bremssystem (4) **gekennzeichnet ist durch**
- mindestens eine zweite Bremsvorrichtung (72), die operativ mit einem zweiten Rad (76) des Motorrads (8) verbunden ist und mit einer zweiten hydraulischen Versorgungsschaltung (80) versehen ist, die fluidisch von der ersten hydraulischen Versorgungsschaltung (20) getrennt ist,
- einen zweiten elektrischen Aktuator (84) aufweisend zweite elektrische Motormittel, die operativ mit einem zweiten elektrisch oder elektromechanisch betätigten Kolben (88) verbunden sind, der in Fluidverbindung mit der zweiten Versorgungsschaltung (80) steht,
- mindestens eine zweite manuell betätigte Vorrichtung (92), die operativ mit einer zweiten hydraulischen Vorrichtung (96) verbunden ist, die mit einem zweiten manuell betätigten Kolben (100) versehen ist,
- wobei der zweite manuell betätigte Kolben (100) hydraulisch mit der zweiten Versorgungsschaltung (80) über eine zweite Bypass-Leitung (104) verbunden ist und in Reihe, stromaufwärts, mit dem zweiten elektrisch oder elektromechanisch betätigten Kolben (88) angeordnet ist,
- wobei die Verarbeitungs- und Steuereinheit (68) operativ mit der zweiten Schnittstellenöffnung (92) und mit dem zweiten elektrischen Aktuator (84) verbunden ist und programmiert ist, sodass:
- in dem Standardbetrieb bei Betätigung der zweiten Schnittstellenöffnung (92) der zweite elektrisch oder elektromechanisch betätigte Kolben (88) verschoben wird, sodass er die zweite Bypass-Leitung (104) verschließt, den zweiten manuell betätigten Kolben (100) fluidisch von der zweiten Versorgungsschaltung (80) trennt und die zweite Bremsvorrichtung (72) betätigt.

11. Bremssystem (4) für ein Motorrad (8) nach Anspruch 10, wobei mindestens eine der stromaufwärts angeordnete Verbindungsleitung (56) und stromabwärts angeordnete Verbindungsleitung (60) mit einer Vorrichtung (64, 86) versehen ist, die mindestens einen Betriebszustand aufweist, der den Durchgang von Fluid durch die entsprechende Verbindungsleitung (56, 60) ermöglicht, sowie einen Betriebszustand, wie beispielsweise eine geschlossene Stellung, der den Durchgang von Fluid durch die entsprechende Verbindungsleitung (56, 60) verhindert, und wobei in dem Standardbetrieb die mindestens eine Vorrichtung (64, 84) geschaltet ist, sodass sich der zweite indirekte Kolben (102) selbst nach manueller Betätigung nicht bewegen kann, während der zweite elektrisch oder elektromechanisch betätigte Kolben (88) verschoben wird, um gleichzeitig die mindestens eine zweite Bremsvorrichtung (72) zu betätigen.

12. Bremssystem (4) für ein Motorrad (8) nach Anspruch 10 oder 11, wobei die Verarbeitungs- und Steuereinheit programmiert ist, sodass sie in dem Back-up-Betriebsmodus den Rückzug des zweiten elektrisch oder elektromechanisch betätigten Kolbens (88) verhindert oder ermöglicht, um die zweite Bypass-Leitung (104) nicht zu verschließen und eine direkte Betätigung der zweiten Bremsvorrichtung (72) durch den zweiten manuell betätigten Kolben (100) zu ermöglichen.

13. Bremssystem (4) für ein Motorrad (8) nach Anspruch 12 in Kombination mit Anspruch 11, wobei die Verarbeitungs- und Steuereinheit (68) programmiert ist, sodass sie in dem Back-up-Betriebsmodus die mindestens eine Vorrichtung (64, 84) schaltet, sodass sich der zweite indirekte Kolben (102) nach der manuellen Betätigung bewegen kann.

14. Bremssystem (4) für ein Motorrad (8) nach einem der Ansprüche 10, 11, 12 oder 13, wobei die erste und die zweite Bremsvorrichtungen auf verschiedenen Achsen des zugehörigen Motorrads angeordnet sind.

15. Motorrad (8) umfassend ein Bremssystem (4) nach einem der Ansprüche 1 bis 14.

## Revendications

1. Un système de freinage (4) pour une motocyclette (8) comprenant : au moins un premier dispositif de freinage (12) relié de manière opérative à une première roue (16) de la motocyclette (8), et pourvu d'un premier circuit d'alimentation hydraulique (20),
un premier actionneur électrique (24) comportant des premiers moyens moteurs, actionnés électriquement ou électromécaniquement et reliés de manière opérative à un premier piston actionné électriquement ou électromécaniquement (28) relié fluidiquement audit premier circuit d'alimentation hydraulique (20),
au moins une première interface ou orifice d'entrée (32) relié de manière opérative à un premier dispositif hydraulique (36) pourvu d'un premier piston actionné manuellement (40),
dans lequel le premier piston actionné manuellement (40) est subdivisé en un premier piston direct (41), directement relié au premier orifice d'interface (32), et un premier piston indirect (42), en série avec le premier piston direct (41), relié à celui-ci par l'interposition d'un premier ressort de rappel (43),
le premier piston indirect (42) étant relié hydrauliquement audit premier circuit d'alimentation hydraulique (20) par l'intermédiaire d'un premier conduit de dérivation (44), et disposé en série, en amont, avec le premier piston actionné électriquement ou électromécaniquement (28),
- dans lequel le système de freinage (4) comprend un réservoir de fluide hydraulique (52) relié fluidiquement au premier dispositif hydraulique (36) par un conduit de connexion (56) en amont du premier piston indirect (42) et un conduit de connexion (60) en aval du premier piston indirect (42),
dans lequel le système de freinage (8) est pourvu d'une unité de traitement et de commande (68), reliée de manière opérative audit premier actionneur électrique (24), programmée de sorte que :
en fonctionnement standard, lors de l'actionnement du premier orifice d'interface (32), le premier piston actionné électriquement ou électromécaniquement (28) se déplace de façon à obturer le premier conduit de dérivation (44), à déconnecter fluidiquement le premier piston actionné manuellement (40) du premier circuit d'alimentation hydraulique (20), et à actionner simultanément ledit au moins un premier dispositif de freinage (12),
**caractérisé en ce que**
le système de freinage (4) comprend au moins un second dispositif actionné manuellement (92), distinct du premier orifice d'interface (32), et relié de manière opérative à un second dispositif hydraulique (96) pourvu d'un second piston actionné manuellement (100),
dans lequel le second piston actionné manuellement est relié hydrauliquement audit premier piston indirect (42) par l'intermédiaire d'un second conduit de dérivation (104), et est disposé en série, en amont, avec le premier piston indirect (42),
lequel est à son tour relié fluidiquement au premier circuit d'alimentation hydraulique (20) par l'intermédiaire duquel il actionne le premier dispositif de freinage (12) et/ou un second dispositif de freinage (72).

2. Le système de freinage (4) pour une motocyclette (8) selon la revendication 1, dans lequel au moins l'un desdits conduits de connexion amont (56) et conduit de connexion aval (60) est pourvu d'au moins un dispositif (64, 86) ayant au moins une condition de fonctionnement permettant le passage du fluide à travers le conduit de connexion correspondant (56, 60), et une condition de fonctionnement, telle qu'une position fermée, empêchant le passage du fluide à travers le conduit de connexion correspondant (56, 60), et dans lequel, en ledit fonctionnement standard, ledit dispositif (64, 86) est commuté de sorte que le piston indirect (42) ne puisse pas se déplacer même à la suite d'un actionnement manuel et demeure dans une position de butée, tandis que le premier piston actionné électriquement ou électromécaniquement (28) est déplacé afin d'actionner simultanément ledit au moins un premier dispositif de freinage (12).

3. Le système de freinage (4) pour une motocyclette (8) selon la revendication 2, dans lequel ledit au moins un dispositif (86, 64) prévoit deux conditions de fonctionnement dans lesquelles le passage du fluide à travers le conduit de connexion amont correspondant (56) est empêché ou autorisé, afin d'isoler la contribution du premier ressort de rappel (43) lors du fonctionnement en mode de secours hydraulique.

4. Le système de freinage (4) pour une motocyclette (8) selon l'une quelconque des revendications 1, 2 ou 3, dans lequel l'unité de traitement et de commande (68) est programmée de sorte qu'en mode de secours, elle rétracte ou autorise la rétraction du premier piston actionné électriquement ou électromécaniquement (28) de manière à ne pas obturer le premier conduit de dérivation (44) et à permettre l'actionnement direct du premier dispositif de freinage (12) par le premier piston actionné manuellement (40), lorsque le premier orifice d'interface (32) est actionné.

5. Le système de freinage (4) pour une motocyclette (8) selon la revendication 4 en combinaison avec la revendication 2, dans lequel l'unité de traitement et de commande (68) est programmée de sorte qu'en ledit mode de secours, elle commute ledit au moins un dispositif (64, 86) de manière à ce que le premier piston indirect (42) puisse se déplacer conformément à l'actionnement manuel.

6. Le système de freinage (4) pour une motocyclette (8) selon l'une quelconque des revendications 1 à 5, dans lequel le second piston actionné manuellement (100) est à son tour subdivisé en un second piston direct (101), directement relié au second dispositif d'actionnement manuel (92), et un second piston indirect (102), en série avec le second piston direct (101) et relié à celui-ci par l'interposition d'un second ressort de rappel (103).

7. Le système de freinage (4) pour une motocyclette (8) selon la revendication 6, dans lequel le second piston indirect (102) est en connexion hydraulique avec le premier piston indirect (42) via le second conduit de dérivation (104), et est disposé en série, en amont, par rapport à celui-ci.

8. Le système de freinage (4) pour une motocyclette (8) selon l'une quelconque des revendications 1 à 7, dans lequel le premier dispositif de freinage (12) est raccordable de manière opérative à ladite première roue (16) d'un premier essieu unique de la motocyclette (8) et le second dispositif de freinage (72) est raccordable de manière opérative à une seconde roue (76) d'un second essieu de la motocyclette (8).

9. Le système de freinage (4) pour une motocyclette selon l'une quelconque des revendications de 8 à 11, dans lequel lesdits premier et second dispositifs hydrauliques (36, 96) sont intégrés dans un même corps de pompe.

10. Un système de freinage (4) pour une motocyclette (8) dans lequel le système comprend :
- au moins un premier dispositif de freinage (12) relié de manière opérative à une première roue (16) de la motocyclette (8), et pourvu d'un premier circuit d'alimentation hydraulique (20),
un premier actionneur électrique (24) comportant des premiers moyens moteurs, actionnés électriquement ou électromécaniquement et reliés de manière opérative à un premier piston actionné électriquement ou électromécaniquement (28) relié fluidiquement audit premier circuit d'alimentation hydraulique (20),
au moins une première interface ou orifice d'entrée (32) relié de manière opérative à un premier dispositif hydraulique (36) pourvu d'un premier piston actionné manuellement (40),
dans lequel le premier piston actionné manuellement (40) est subdivisé en un premier piston direct (41), directement relié au premier orifice d'interface (32), et un premier piston indirect (42), en série avec le premier piston direct (41), relié à celui-ci par l'interposition d'un premier ressort de rappel (43),
le premier piston indirect (42) étant relié hydrauliquement audit premier circuit d'alimentation hydraulique (20) par l'intermédiaire d'un premier conduit de dérivation (44), et disposé en série, en amont, avec le premier piston actionné électriquement ou électromécaniquement (28),
- dans lequel le système de freinage (4) comprend un réservoir de fluide hydraulique (52) relié fluidiquement au premier dispositif hydraulique (36) par un conduit de connexion (56) en amont du premier piston indirect (42) et un conduit de connexion (60) en aval du premier piston indirect (42),
- dans lequel le système de freinage (8) est pourvu d'une unité de traitement et de commande (68), reliée de manière opérative audit premier actionneur électrique (24), programmée de sorte que :
- en fonctionnement standard, lors de l'actionnement du premier orifice d'interface (32), le premier piston actionné électriquement ou électromécaniquement (28) se déplace de façon à obturer le premier conduit de dérivation (44), à déconnecter fluidiquement le premier piston actionné manuellement (40) du premier circuit d'alimentation hydraulique (20), et à actionner ledit au moins un premier dispositif de freinage (12),
le système de freinage (4) étant **caractérisé par**
au moins un second dispositif de freinage (72) relié de manière opérative à une seconde roue (76) de la motocyclette (8), et pourvu d'un second circuit d'alimentation hydraulique (80), fluidiquement distinct du premier circuit d'alimentation hydraulique (20),
- un second actionneur électrique (84) comportant des seconds moyens moteurs électriques reliés de manière opérative à un second piston actionné électriquement ou électromécaniquement (88) relié fluidiquement audit second circuit d'alimentation (80),
- au moins un second dispositif actionné manuellement (92) relié de manière opérative à un second dispositif hydraulique (96) pourvu d'un second piston actionné manuellement (100),
- dans lequel le second piston actionné manuellement (100) est relié hydrauliquement audit second circuit d'alimentation (80) par l'intermédiaire d'un second conduit de dérivation (104), et est disposé en série, en amont, avec le second piston actionné électriquement ou électromécaniquement (88),
- dans lequel l'unité de traitement et de commande (68) est reliée de manière opérative au second orifice d'interface (92) et audit second actionneur électrique (84), programmée de sorte que :
- en fonctionnement standard, lors de l'actionnement du second orifice d'interface (92), le second piston actionné électriquement ou électromécaniquement (88) se déplace de façon à obturer le second conduit de dérivation (104), à déconnecter fluidiquement le second piston actionné manuellement (100) du second circuit d'alimentation (80), et à actionner le second dispositif de freinage (72).

11. Le système de freinage (4) pour une motocyclette (8) selon la revendication 10, dans lequel au moins l'un desdits conduits de connexion amont (56) et conduit de connexion aval (60) est pourvu d'un dispositif (64, 86) ayant au moins une condition de fonctionnement permettant le passage du fluide à travers le conduit de connexion correspondant (56, 60), et une condition de fonctionnement, telle qu'une position fermée, empêchant le passage du fluide à travers le conduit de connexion correspondant (56, 60), et dans lequel, en fonctionnement standard, ledit au moins un dispositif (64, 84) est commuté de sorte que le second piston indirect (102) ne puisse pas se déplacer même à la suite d'un actionnement manuel, tandis que le second piston actionné électriquement ou électromécaniquement (88) est déplacé afin d'actionner simultanément ledit au moins un second dispositif de freinage (72).

12. Le système de freinage (4) pour une motocyclette (8) selon la revendication 10 ou 11, dans lequel ladite unité de traitement et de commande est programmée de sorte qu'en mode de secours, elle rétracte ou autorise la rétraction du second piston actionné électriquement ou électromécaniquement (88) de manière à ne pas obturer le second conduit de dérivation (104) et à permettre l'actionnement direct du second dispositif de freinage (72) par le second piston actionné manuellement (100).

13. Le système de freinage (4) pour une motocyclette (8) selon la revendication 12 en combinaison avec la revendication 11, dans lequel l'unité de traitement et de commande (68) est programmée de sorte qu'en mode de secours, elle commute ledit au moins un dispositif (64, 84) de manière à ce que le second piston indirect (102) puisse se déplacer conformément à l'actionnement manuel.

14. Le système de freinage (4) pour une motocyclette (8) selon l'une quelconque des revendications 10, 11, 12 ou 13, dans lequel lesdits premier et second dispositifs de freinage sont disposés sur des essieux différents de la motocyclette associable.

15. Une motocyclette (8) comprenant un système de freinage (4) selon l'une quelconque des revendications 1 à 14.
